# EUROPEAN PATENT APPLICATION

(11) **EP 0 547 013 A1**
(43) Date of publication of application: **16.06.1993**
(21) Application number: 92830669.5
(22) Date of filing: 10.12.1992
(51) Int. Cl.: H01H 3/40, H01H 19/18, F16H 57/02, G05G 21/00

(54) **Worm gear limit switch device on which a plurality of components of different types can be mounted so as to form a single block**

(30) Priority: 12.12.1991 IT MI911093 U
(71) Applicant: TECNO ELETTRICA RAVASI S.r.l., I-22056 Olgiate Molgora (Co) (IT)
(72) Inventor: Blasi, Osvaldo, Olgiate Molgora (Co) (IT)
(74) Representative: Klausner, Erich

(57) **Abstract**

The limit switch device has small overall dimensions due to a close-packed arrangement of the set (30) of step-down gears, which are assembled on at least two pins to obtain very high step-down ratios. Inside the casing, made up of a base (10) and of a cover (80), there is an intermediate plate (60) with a flat surface (62) on which there are at least two projecting couplers (52, 46) to drive operating components (70, 72 ...) that can be quickly assembled in different combinations by using seats designed for this purpose. The toothed wheels of such an assembly (30) can mate each other by means of hubs having polygonal joints (23, 34, 39), which are discrete or integral with other elements such as the said couplers, and which make the assembling easier.

## Description

This invention refers to a worm gear limit switch device which offers the advantage of a quick and easy assembling both of its mechanical elements and of the electromechanical or electronic operating components connected with it, and which has a very high maximum reduction ratio and offers the possibility of obtaining a wide and subdivided range of revolution reduction ratios between limit values.

At present devices of the above-mentioned kind are known which, besides having quite limited reduction ranges for example from 1:50 to 1:400, have the disadvantage that their mechanical structure is formed by a quantity of single gears to be separately mounted on one or more pins, which sometimes are very complicated and expensive; moreover these gears are arranged in such a way as to need a lot of space, so that the overall dimensions of the devices become bigger, which is often incompatible with the space available for their housing.

The complex and fragmentary assembling of the various parts requires labour time and does not allow to supply the customers quickly. Furthermore, there is no flat assemblig surface, with at least two outlets, on which electromechanical or electronic operating elements in different combinations can be easily and alternatively assembled.

The purpose of this invention is that of creating a worm gear limit switch device, which is as close-packed and precise as possible, wich avoids said disadvantages, which can be quickly and easily assembled and can have very high step-down ratios compared to the inlet shaft and a wide range of ratios between the maximmum and the minimum ones, and in which it is as quick as easy to assemble the operating components.

According to the invention, the worm gear limit switch device includes a base casing in which the inlet worm screw shaft is arranged in longitudinal direction and meshes with a respective helicoidal wheel which turns on a first pin; this helicoidal wheel is connected, by means of a polygonal hub integral with it, with a pinion gear which moves transmission gears that are coupled each other and turn on a second lateral pin, parallel to the first one. A third pin, next to the second one, makes it possible to have, when needed, a further outlet for fastening various operating components, as explained below.

In particular, the above-mentioned pinion gear, which is directly connected with the helicoidal wheel, meshes with the first transmission wheel, placed below it, and turning on the second pin, which is connected by means of a second polygonal hub to a second transsmission wheel, coaxial on the same second pin.

This second transmission wheel moves a third couple of wheels which turn on the first pin and which are kept together by a third coupling hub; the latter couple meshes with a fourth couple of wheels turning on the second pin. The upper wheel of this fourth couple meshes with the final toothed wheel of the set of gears, which turns clearly on the first pin, and is provided with a coupler having a first outlet bush from which the movement for any operating component is taken in. A second outlet bush is integral with said fourth couple of toothed wheels turnig on the second pin. Symmetrical to this final thoothed wheels and meshing with the upper thoothed wheel of the fourth couple of gears, there is a ninth thoothed wheel, turning on a third pin; this latter wheel has an outlet bush similar to the previous ones and may be used as third movement intake for other operating components.

Said operating components can be easily mounted on an intermediate plate that divides the space inside the device, between the base and the closing cover, in two parts, in the lower part being arranged the set of step-down gears, while in the upper part can be mounted the operating components, the latter being fastened to the upper flat surface of the above-mentioned intermediate plate, on whose side three holes are provided corresponding in turn to the bush connected with the final toothed wheel turning on the first pin, to the bush corresponding to the second pin and to another possible one connected with the third pin; there is also a lot of seats or grooves to make it easier to assemble different operating components, having standard connections, which can be freely chosen according to one's needs.

The arrangement of the set of the step-down gears with the slower final toothed wheel which is coaxial with the first pin, placed next a corner of the base casing, opportunely positions the movement intake of one operating components in a corner of the intermediate plate, giving the possibility of placing other components in the space left avaible on the plate, which, on the other hand, is small as possible, according to one of the objects of the device.

The first, the second and the third rotation pin of the toothed wheels of the step-down gear set, are consisting of simple pins sheared from a metal rod, and therefore very cheap.

Keeping fixed, as a basis, the reduction ratio between the worm screw shaft and the helicoidal thoothed wheel, it is possible to obtain various matings of the toothed wheels of the step-down gear set, maintaining the center distance of the respective pins, in order to have a subdivided sequence of reduction ratios in between the maximum and the minimum values. Finally, both the helicoidal wheel and the transmission toothed wheels can be preassembled each other in couples or with oulet bushes, thus forming blocks of elements which can be easily and quickly assembled on the device casing base.

Details of the invention will be described on the basis of an exemplifying assembled device with reference to the enclosed drawings, in which:
Fig. 1 shows in a perspective exploded view an assembling example of the structure of the worm gear limit switch device, according to the invention;
Fig. 2 shows a partial longitudinal cross section of the arrangement of the thoothed wheels which form the step-down gear set of the device;

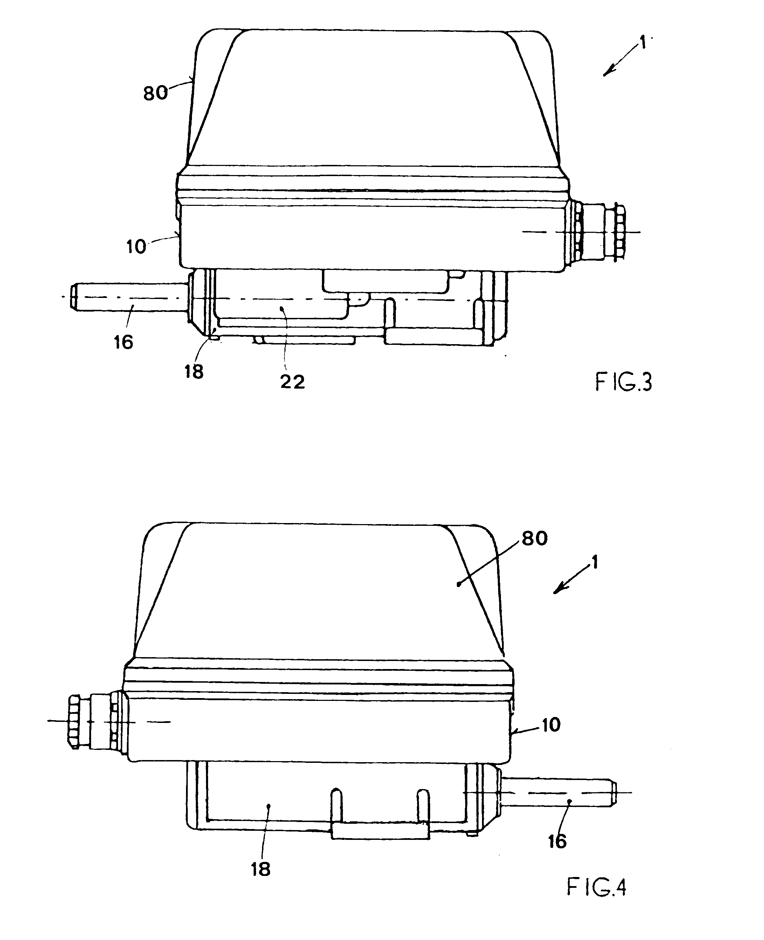

Fig. 3 shows a lateral view of the external shape of the device shown in drawing 1, seen from one of its sides;
Fig. 4 shows a lateral view of the same device of drawing 1, seen from the opposite side of drawing 3;
Fig. 5 shows a plan view of the device of figure 1, from the bottom.

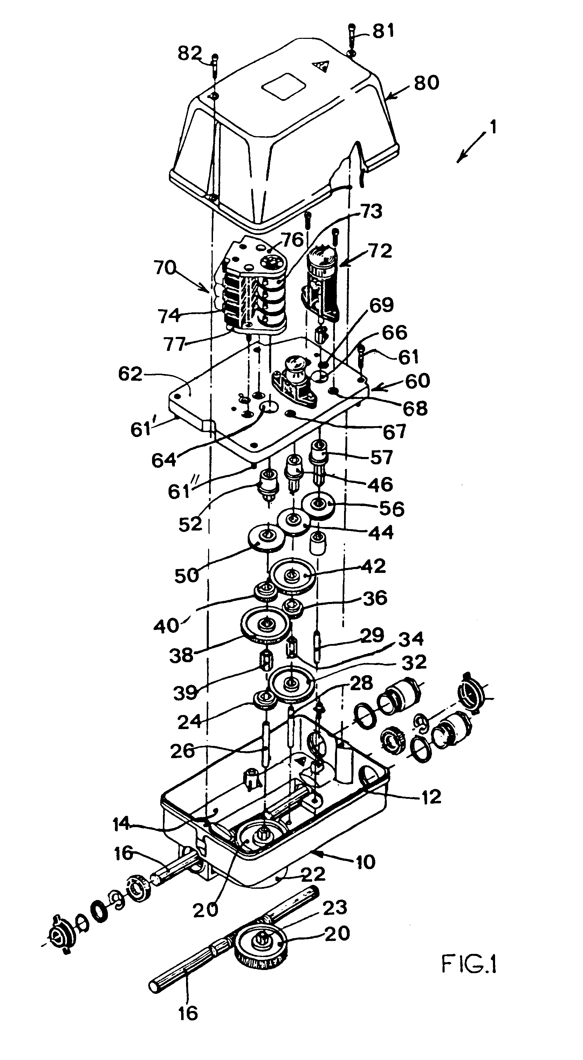

In figure 1, the device according to the invention shown by reference 1, includes a body formed by a lower casing or base 10, on top of which it is possible to place a cover 80 which can be fastened by means of screws 81 and 82 to the edge 12 of the base, a gasket 84 making the casing tight.

Inside base 10 it is possible to fasten, by means of screws 61 , 61' , 61", an intermediate plate 60 which divides the inside of the body in two parts; the lower part 14 forming practically the casing of the set of step-down gears, while the upper part contains various types of operating components, such as one or more sets of cams and their respective microswitches, as marked for example with 70, potentiometers 72 or other electronic components.

The top of the intermediate plate 60 has a flat surface 62 provided with one or more holes 64, 65, 66 apt to receive couplings for movement intakes of one or more components like the above-mentioned ones 70, 72, and other holes or blind seats 67, 68, 69 ... to facilitate the assembling of other components scheduled by the manufaturer of the limit switch device as for example the above-mentioned device 70, constituted by a group of cams 73 and microswitches 74, already preassembled between two small plates 76 and 77, and therefore quickly assemblable as well other components with standard connections.

The practicalness of the inner arrangement of device according to the invention must be underlined since it makes possible both to assemble quickly the device in the manufacturing plant, and to replace easily any operating component, such as for example a cam/microswitch which may be damaged by use or may need to be adjusted in a different way, by taking away only the cover 80 in order to reach the upper inner part, while the lower inner part 14, containing the reduction gears be left isolated and protected from foreign matters.

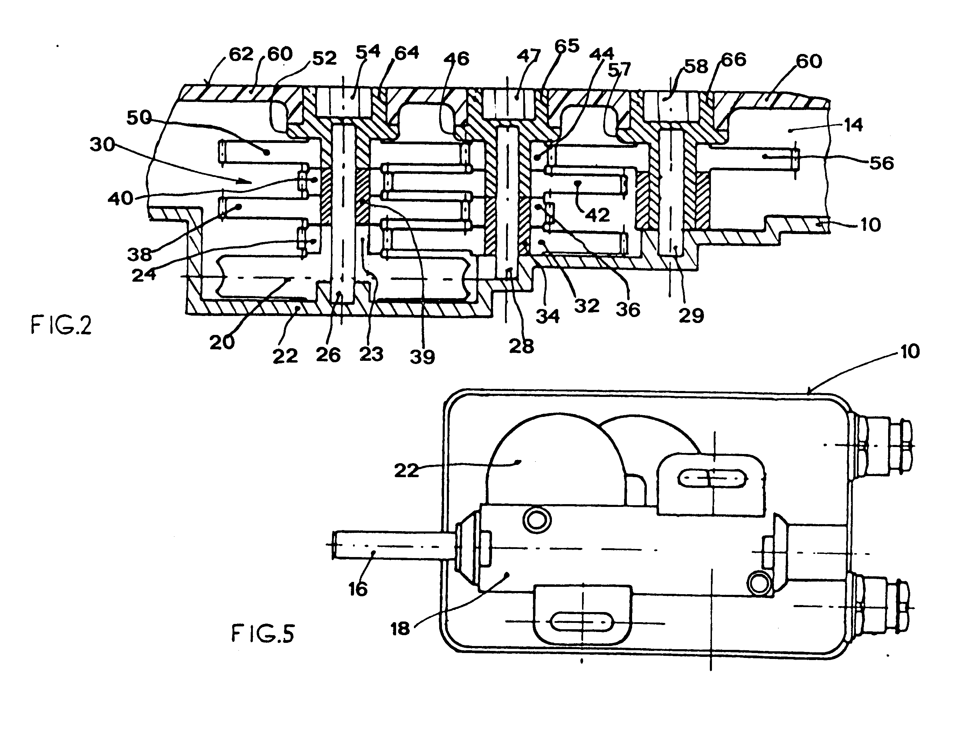

Figures 1 and 2 show in particular the arrangement of the set of toothed wheels which constitute the step-down gear set of the device, indicated at 30 in drawing 2.

The inlet worm screw shaft 16, which can be connected with a corresponding shaft of a machine or equipment (not shown) that has to be set by the device, is placed in a longitudinal sump 18 on the bottom of the base 10 and is connected with a helicoidal wheel 20, thus creating a first pre-arranged reduction ratio. The helicoidal wheel 20 is arranged near to the shaft 16 in a recess 22 and can be coupled by means of a polygonal hub 23, integral with it, with a pinion gear 24 coaxially assembled on the same first pin 26 of wheel 20, perpendicular to the axis of shaft 16.

The step-down gear set 30 includes, besides the inlet shaft 16 and the respective helicoidal wheel 20, other eight toothed wheels (24, 32, 36, 38, 40, 42, 44, 50), four of which (24, 38, 40, 50) are arranged on said first pin 26, and four of them (32, 36, 42, 44) are arranged on a second pin (28) parallel to the first one. A third pin 29, parallel to the previous ones, is connected with a further ninth toothed wheel, which makes it possible to make another coupling intake rotating into a hole 66, different from the main coupling hole 64, which is coaxial with the first pin 26, and different from the hole 65, which is coaxial with the second pin 28.

It is therefore possible to obtain very high total values of revolution reducing ratios between the inlet shaft 16 and the final wheel 50 by means of eight toothed wheels placed on two pins, besides the toothed helicoidal wheel 20, thus forming a sequence of four transmissions which correspond to the same number of intermediate reduction steps, as described below.

The first transmission step takes place between the pinion gear 24, connected, by means of the hub 23 integral with the helicoidal wheel 20, with the wheel 32 turning on the second pin 28. Wheel 32 is connected by means of a polygonal hub 34 with a wheel 36 coaxial with said second pin 28.

The second transmission step takes place between wheel 36 and wheel 38 which turns freely on the first pin 26 as regards to the couple 20 and 24. Wheel 38 is connected, by means of a polygonal hub 39, with a wheel 40 which turns together with it on said first pin.

The third transmission step takes place between wheel 40 and wheel 42, which turns on the second pin 28 and is free from the couple of wheels 32, 36 below it.

Wheel 42 is connected with an upper wheel 44, coaxial with said second pin 28, by means of a coupling 46 which has a bush, with a polygonal seat 47, for the movement intake of an operating component.

The fourth transmission step takes place between wheel 44 and the final wheel 50, which turns freely on the first pin 26 and which is connected with a coupling 52, which has on its upper side a bush with polygonal seat 54 that acts as movement intake of an operating component, for example of a set of cams and microswitches.

With reference of above described there are two seats or movement intakes 54 and 47, which can be operated at a different or at the same number of revolution, according to the number of teeth of the wheels 44 and 50, while a third movement intake can be obtained, corresponding to the third pin 29, parallel to said two pins 26 and 28, and on which a toothed wheel 56 can turn; wheel 56 is connected with a coupling 57 which has a bush with a polygonal seat 58, making up said third movement intake. The spin velocity of the coupling 57 must be, according to the invention, the same as that of coupling 52, since pins 26 and 29 are simmetrically arranged in comparison with pin 28, which means that, for reasons of mechanical meshing, the toothed wheel 56 must have the same number of teeth and therefore the same pitch diameter as wheel 50.

With the step-down gear set 30, by means of a mutual dimensioning between the pinion gear 24 and first auxiliary wheel 32 and, then among, between the wheels 36, 38, 40, 42, 44, 50, is possible to obtain, in between a minimum and a maximum reduction ratio values, a wide range of intermediate gearing down ratios, and to obtain a very high total reduction between the inlet shaft 16 and the final wheel 50. For the sake of brevity, we will call d24, d32, d36, d38, d40, d42, d44 and d50 the number of teeth of the corresponding gears, and with RB the basic reduction ratio between the worm screw and the helicoidal wheel 20; therefore the total reduction ratio ratio p is:
p = d50:d44xd42:d40xd38:d36xd32:d24xRB
For example having:
d50 = 108 d38 = 108
d44 = 36 d36 = 36
d42 = 108 d32 = 108
d40 = 36 d24 = 36
and RB = 100
p =8100 (maximum ratio value)
while having:
d50 = 36 d38 = 36
d44 = 108 d36 = 108
d42 = 36 d32 = 36
d40 = 108 d24 = 108
and RB = 100
p =1,234 (minimum ratio value)

With other intermediate combinations of toothed wheels it is possible to obtain integral ratios, for example 20, 25, 50, ... 100, ... 200, 300 ... 1000 ... 2000, 3000, 4000 ... until the maximum value, and many other subdivided ratios in between these ones.

The close-packed arrangement of the toothed wheels of the step-down set 30, enables to achieve a limit switch device with small overall dimensions, even though with very high revolution reductions, which is not possible with similar devices now available on the market; besides it is also possible to assemble a wide range of operating components. If it is not necessary to reach so high transmission ratios, the general arrangement of pins and toothed wheels that has just been described may be limited to six transmission wheels instead of eight, not using wheels 44 and 50, and using only two pins 26, 28, or, if needed, using the third pin 29 with a seventh wheel 56.

When one needs even lower movement reductions, it is possible to replace the transmission - worm screw reduction - helicoidal wheel set, with two bevel gears.

The advantages of the described and drawn structure include simplicity, quickness in mounting and decrease of assembling mistakes, since many of the toothed wheels of the step-down set 30 can mate and can be preassembled in blocks; when the device is being used, the setting or the substitution of operating components is easier because it is possible to reach the mounting surface 62 by taking away only the cover 80, which has unlosable screws, and at the same time to keep the lower part containing the step-down gear set protected from the entry of foreign matters.

## Claims

1. A worm gear limit switch device, characterized by a lower casing base (10) and by a cover (80) which can be fastened by means of screws (81, 82) to the casing base itself, within the perimeter of the latter being possible to fasten an intermediate plate (60) which divides the space inside the device in a lower part (14) in which the set (30) of the step-down gears is set-out and in another part, comprised between the upper surface (62) of the plate (60) and the cover (80), in which different types of operating components can be mounted such as microswitches and/or potentiometers, by means of bushes, having polygonal seats (54, 47, 48), which are part of couplings (52, 46, 57) that can be connected in a twisting way, in order, with the respective final toothed wheel (50, 44, 56) of the step-down set of gears, assembled on three parallel pins (26, 28, 29); said bushes being rotating in holes (64, 65, 66) of the intermediate plate (60), on the surface (62) of which there are also many other threaded holes or blind seats (67, 68, 69 ...) whose center distance is adjusted with the standard connections of the said operating components.

2. A worm gear limit switch device according to claim 1, characterized in that the set (30) of stepdown gears includes a first coupling between the worm screw shaft (16) and the helicoidal wheel (20) turning on a first pin (26) perpendicular to the said shaft (16), and a set of step-down and transmission toothed wheels which are partially assembled on at least a further pin and whose final gears are integral with a first and at least with a second outlet coupling bush for operating components.

3. A worm gear limit switch device according to claims 1 and 2, characterized in that the set (30) of transmission and step-down toothed wheels (24, 32, 36, 38, 40, 42, 44, 50) comprises wheels (24, 38, 40, 50) which are coaxial with said first pin (26), in common with the helicoidal wheel (20) while the remaining ones (32, 36, 42, 44) turn on a second pin (28), lateral and parallel to said first pin; the final wheels, respectively (50) turning on the first pin (26) and (44) turning on the second pin (28) being connected with respective couplings (52) and (46) provided with polygonal seats (54) and (47) for transmitting rotating movement to the operating components, while another toothed wheel (56) turning on a third pin (29) parallel to the previous ones and engaging with the upper toothed wheel (44) of the second pin (28), can be used for a possible third movement intake (58).

4. A worm gear limit switch device according to claims 1 to 3, characterized in that the toothed wheels making up the set (30) of step-down gears of the device can be connected each other so as to form four couples of toothed wheels wherein the first couple, being turning on the first pin (26), consists of the helicoidal toothed wheel (20) and of the pinion gear (24) joined by means of a polygonal hub (23) integral with said helicoidal wheel; the second couple turning on the second pin (28), consists of the wheels (32) and (36) joined by means of a polygonal hub (34); the third couple, turning on the first pin (26), arranged on the first couple and free turning with respect to the latter one, consists of the wheels (38) and (40) joined by means of a hub (39); the fourth couple, turning on the second pin (28), consists of the wheels (42) and (44) joined by means of a coupling (46) which, towards its upper end, is provided with a bush with polygonal seat (47) which can be used as movement intake for an operating component.

5. A worm gear limit switch device according to claims 1 to 4, characterized in that the four couples of toothed wheels are arranged in such a way that in each couple the upper toothed wheel meshes with the lower wheel of the following couple turning on a lateral transmission pin; the upper toothed wheel (44) of the fourth couple meshes, on the one side, with the toothed wheel (50) free turning on the first pin (26) and connected with a coupling (52) on top of which being provided a polygonal seat (54) used as movement intake of an operating component and, on the other side, it meshes with a further toothed wheel (56) turning on the third pin (29) and connected with a coupling (57) on top of which there is a polygonal seat (58) for a third movement intake of an operating component.

6. A worm gear limit switch device according to claims 1 to 5, characterized in that, if only two movement intakes are needed, wheel (56) and the relevant third pin (29) can be left out closing the corresponding outlet hole (66), apt to receive the head of the coupling (57), with a blind cap.

7. A worm gear limit switch device according to claims 1 to 6, characterized in that the spin velocity of the outlet bushes (46, 52, 57) may be the same or different, and can be obtained by conveniently chosing the number of teeth of the respective toothed wheels (50, 44 , 56) coupled with the bushes.

8. A worm gear limit switch device according to claims 1 to 7, characterized in that the bottom of the casing base (50) is provided with a roughly parallelepipedal longitudinal sump (18) in which is housed the inlet shaft (16) of the device, which can be connected with the rotating outlet shaft of a machine or equipment the revolutions of which have to be controlled by the operating component, while the helicoidal wheel (20), connected with said shaft, is housed in a recess (22) next to the longitudinal sump (18) so that the pin (26) of said wheel (20) and the coupling (52), coaxial with it,are next to a corner of the plate (60) in order to facilitate the assembling of others components.

9. A Worm gear limit switch device according to claims 1 to 8, characterized in that the pins (26, 28, 29) are made up of simple pins sheared from a metal rod.

10. A worm gear limit switch device according to claims 1 to 9, characterized in that the upper surface (62) of the intermediate plate (60) is flat.

11. A worm gear limit switch device according to one or more of the claims 1 to 10, characterized in that the set (30) of the step-down gears is made up of gears that can mate each other by means of prismatic polygonal couplers provided with a central round hole and are discrete and/or integral with other elements such as said couplers or one or more of the gears.

12. A worm limit switch device according to claim 1, characterized in that the first gear for the transmission of the rotating movement of the driving shaft is a toothed bevel gear which meshes with a respective bevel gear assembled on said first pin (26) to replace the worm screw - helicoidal wheel reducing set.
